# EUROPEAN PATENT APPLICATION

(11) **EP 4 749 384 A1**
(43) Date of publication of application: **27.05.2026**
(21) Application number: 25214700.4
(22) Date of filing: 10.11.2025
(51) Int. Cl.: G05B 19/418, B65G 54/02, B65B 43/00

(54) **SYSTEM AND METHOD OF FAULT PREDICTION IN PACKAGING LINES, PACKAGING LINE AND COMPUTER PROGRAM PRODUCT THEREOF**

(30) Priority: 21.11.2024 IT 202400026244
(71) Applicant: Tetra Laval Holdings & Finance S.A., 1009 Pully (CH)
(72) Inventor: CAPELLI, Luca, 41123 Modena (IT); CAVALAGLIO CAMARGO MOLANO, Jacopo, 41123 Modena (IT); ROSSI, Stefano, 41123 Modena (IT); CARULLI, Paola, 41123 Modena (IT); PICCININI, Giorgio, 41123 Modena (IT); LARSSON, Gunilla, 22186 Lund (SE)
(74) Representative: Tetra Pak Patent Attorneys

(57) **Abstract**

System (**1**) of fault prediction for a packaging line **(2)** including a planar motor system (**3**); the planar motor system (**3**) comprises planar base element (**10**) as well as independently movable carriers (**4**) configured to manipulate packaging containers (**5**) and movable over the planar base element (**10**). The system (**1**) comprises: a sensory system (**6**) configured to output data relative to physical quantities associated with operation of the independently movable carriers (**4**); and electronic processing resources (**7**) in communication the sensory system (**6**)**.** The electronic processing resources (**7**) and configured to: receive the data outputted by the sensory system (**6**); and process the data outputted by the sensory system (**6**) to determine the occurrence of a possible anomaly in the operation of the independently movable carriers (**4**).

## Description

### TECHNICAL FIELD OF THE INVENTION

The invention relates generally to the field of condition and process monitoring. In particular, the present invention relates to systems and methods of fault prediction in a packaging line having independently movable carriers or movers, a packaging line and computer program product thereof.

### STATE OF THE ART

As is known, condition monitoring, as well as process monitoring, of machine components in production lines, such as in the manufacturing of sealed packages in filling- and packaging lines or related systems, is critical for ensuring a desired functionality over a period of time and fault prediction, as well as monitoring each phase of the production process to achieve the desired result.

Monitoring distortions in the operation of machine components is an essential part in achieving the desired functionality control and prevent wear-related breakdown; in particular, distortion analysis of *e.g.* vibrations in bearings is an important part of industrial predictive maintenance programs so that wear and damages can be discovered and repaired before the machine breaks down, thus reducing operating and maintenance costs. Similarly, process monitoring of the functionality of machine components allows to prevent undesirable situation during the operation of said components, *e.g*. incorrectly implementing process steps to achieve the end result, *e.g*. producing packages; consequently, further industrial predictive maintenance programs may be implemented so that any misconduct in the process can be discovered and corrected, thereby reducing any cost related to the correction of said misconduct.

More recently, planar motor systems based on planar motor technology are used for manipulating packaging containers in the manufacturing of sealed packages; in particular, the abovementioned planar motor systems typically comprise a planar base element and a plurality of movable carriers or movers, which are independently moved along the plane by means of magnetic interaction between the carriers and the base element. The independently movable carriers or movers are controlled to engage the packaging containers in various operations.

### OBJECT AND SUMMARY OF THE INVENTION

A need is felt to improve such planar motor systems, *e.g.* to make the planar motor systems more reliable and improving quality thereof.

Thus, a desire is felt in the sector to provide for optimized systems and methods for predicting possible mechanical and electrical failures of packaging lines, specifically of planar motor systems, both in terms of condition and process monitoring, as well as online process monitoring for detecting possible anomalies or deviations from standard conditions. Furthermore, a further desire is felt to provide systems and methods for predicting failures of the mechanical parts of the planar motor systems to avoid unexpected failures and predict the components' lifetime.

The aim of the present invention is hence to develop a system and a method of fault prediction for a packaging line comprising a planar motor system including independently moving carriers, as well as a related packaging line and a computer program product thereof, thereby solving at least part of the abovementioned inconveniences.

This aim is achieved by the present invention, that relates to a system and a method of fault prediction in a packaging line comprising a planar motor system including independently moving carriers, as well as a related packaging line and a computer program product thereof, as claimed in the appended claims.

### BRIEF DESCRIPTION OF THE DRAWINGS

Figure 1 shows a perspective view of a system of fault prediction for a packaging line, in particular in a planar motor system of the same, according to the present invention.
Figures 2 and 3 show a variation of indicators relating to a fault prediction strategy implemented by a system of fault prediction in a packaging line with respect to the position of the independently movable carriers in different areas of a planar motor system.

### DETAILED DESCRIPTION OF THE INVENTION

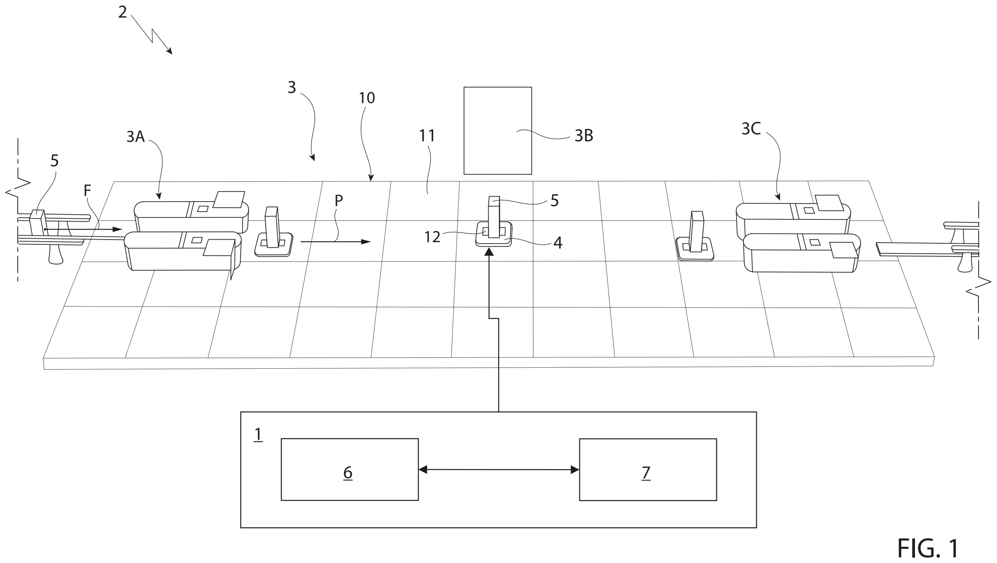

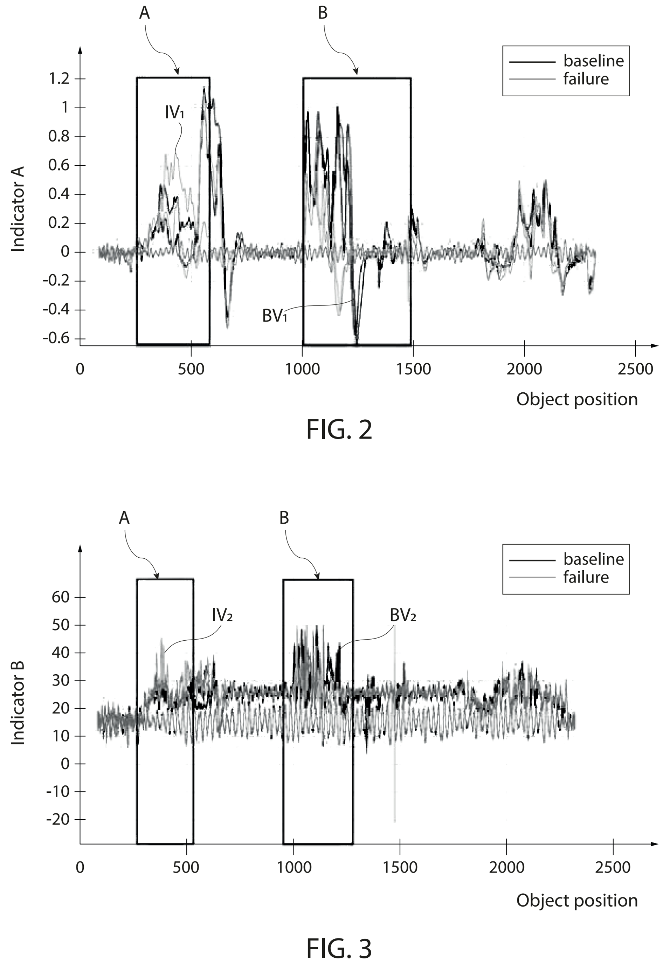

Figure 1 shows a system **1** of fault prediction for a planar motor system **3,** preferably for (*e.g.* in) a packaging line **2;** here, the planar motor system 3 is a six-dimensional, 6D, planar motor system **3.** In particular, the planar motor system **3** comprises independently movable carriers or movers **4** (*e.g.,* comprising grippers or similar devices) configured to manipulate, namely to receive and move with a two-dimensional, 2D, or three-dimensional, 3D, movement, packaging containers **5** along respective paths **P.** According to an exemplary aspect of the present invention, the paths **P** may differ from different independently movable carriers **4** and/or may coincide for one or more independently movable carriers **4.** It is noted that, as shown in Figure 1, different areas of the planar motor system **3** will be considered when referring to Figures 2 and 3.

According to an aspect of the present invention, the planar motor system **3** is an area of the packaging line **2** wherein specific operations for producing the final packages from the packaging containers **5** are carried out; exemplarily and without it being limiting to the present invention, the planar motor system **3** is an area in which caps are applied to the packaging containers **5.** According to further aspects of the present invention, not disclosed in further detail in the following paragraphs, the planar motor system **3** is an area wherein one or more further operations are carried out, *e.g.* in which the packaging containers **5,** which are in turn open packages configured to be manipulated to obtain the final packages, are moved through a sterilization station and/or filling station and/or sealing station (not shown) of the packaging line **2.**

According to a further aspect of the present invention, the planar motor system **3** comprises a planar base element **10,** over which the independently movable carriers **4** move. The planar base element **10** comprises a plurality of plates **11,** here magnetic or magnetizable plates, arranged to form a base of the planar motor system **3;** in particular, as exemplified hereinafter, the plates **11** are configured to generate a magnetic field, in particular upon receiving a command from an external source, *e.g.* external electronic processing resources such as a computer or the like. The independently movable carriers **4** may comprise one or more permanent magnets (not shown) that interact with the magnetic field generated by the plates **11** to move them along the path **P.** According to an aspect of the present invention, each independently moving carriers **4** is moved according to one or more predetermined profiles, *e.g*. a certain path **P,** a certain speed and/or a certain acceleration to perform the required operations; without it being limiting to the present invention, it is noted that one or more independently moving carriers **4** may move according to the same path **P** or, *e.g.,* according to parallel paths **P.**

It is furthermore noted that an example of a planar motor system **3** will be discussed in the following paragraphs; however, multiple planar motor systems, similar to the planar motor system **3** shown in Figure 1 and described in the present disclosure, may be present in the packaging line **2.** Thus, it is assumed that the considerations made in the following referring to the planar motor system **3** may be applied in a similar manner to the further planar motor systems provided in different stages of the packaging line **2.**

In particular, the system **1** comprises:
- a sensory system **6** configured to output data relative to physical quantities associated with operation of the independently movable carriers **4;** and
- electronic processing resources **7** in communication with the sensory system **6** and conveniently with the independently moving carriers **4.**

The electronic processing resources **7** may be configured to control the motion of the independently movable carriers **4** along the respective path **P,** *e.g.* determined based on one of the predetermined profilometers. Furthermore, the electronic processing resources **7** may be configured to command the plates **11** of the planar base element **10** to generate the magnetic field for moving the independently movable carriers **4.**

According to an aspect of the present invention, the electronic processing resources **7** are of a local type, *e.g.* they are implemented as a local unit; according to a further and alternative aspect of the present invention, electronic processing resources 7 are of a distributed type, *e.g.,* on nodes in a network, and implementing paradigms such as cloud computing. Without it limiting to the present invention, the electronic processing resources **7** are hereinafter of the local type.

According to an aspect of the present invention, the independently movable carriers **4** may comprise end effectors or actuators or handlers or grippers **12** configured *e.g*. to receive and move the packaging containers **5;** in particular, the independently movable carriers **4** move along the respective path **P** as a response to the magnetic field generated by the plates **11** of the planar motor system **3,** *i.e.* the electronic processing resources **7** are configured to generate a command for the plates **11** to generate a corresponding magnetic field and, thus, a corresponding magnetic force applied to the independently movable carriers **4** to move the latter according to the path **P** at a certain speed in order to perform the required operations.

The independently movable carriers **4** may be configured to transit through a number of processing stations **3A, 3B, 3C.** For example, the processing stations may comprise a respective receiving stations **3A** to receive the packaging containers 5, a cap applicator station **3B** whereby a cap is applied on the packaging container **5,** a collection or release station **3C,** wherein the packaging containers **5** are released from the independently movable carriers **4.**

In addition, the independently movable carriers **4** are configured to receive at respective receiving stations **3A** of the planar motor system **3** the packaging containers **5,** in particular by retaining said packaging containers **5** by means of the end effectors **12.** Thus, each end effector **12** is characterized by a respective gripping force, applied to the packaging containers **5** to retain them and keep them retained as the independently movable carriers **4** move along the path **P;** it is noted that, in order to retain the packaging containers **5,** thereby applying the gripping force, the independently movable carriers **4** are controlled, *e.g*. by the electronic processing resources **7,** to enable the end effectors **12,** in particular to make them commute from a opened position, wherein the end effectors **12** are spaced to not apply any gripping force to any element arranged on the independently movable carriers **4,** and a closed position, wherein the end effectors **12** are in a position to substantially precisely accommodate a packaging container **5** and, thus, the gripping force, which is the force to keep the packaging containers **5** retained, is applied to the same packaging containers **5.** When the planar motor system **3** is the area in which cap are applied, the packaging containers **5** are moved from the receiving station **3A** to the cap applicator station **3B** of the same planar motor system **3** wherein a cap applicator apparatus (not shown) of the packaging line **2** is configured to apply a cap to the respective packaging container **5.** After having applied the cap, the independently movable carrier **4** moves the packaging container **5,** now provided with the cap, to the collection or release station **3C,** wherein the packaging containers **5** are released by the independently movable carriers **4,** namely by the end effectors **12,** and transferred to a further conveyor; in this case, upon reaching the collection station **3C,** the end effectors **12** are made to commute from the closed to the opened position to let the packaging containers **5** to be received by the collecting station **3C.**

The electronic processing resources **7** are configured to:
- receive the data outputted by the sensory system **6;** and
- process the data outputted by the sensory system **6** to determine the occurrence of a possible anomaly in the operation of the independently movable carriers **4,** *i.e.* performing condition and/or process monitoring by verifying if the condition of the planar motor system **3** and/or the operation of it are subject to an anomaly.

According to an aspect of the present invention, if an occurrence of a possible anomaly in the operation of the independently moving carriers **4** is determined to be present or predicted to occur, the system **1,** in particular the electronic processing resources **7,** is configured to, as a function of the determination of the occurrence of the anomaly in the operation of the independently movable carriers **4,** adjust operation of the packaging line **2** *(e.g.,* by varying the speed of the processed packaging containers **5,** for instance by slowing them down or stopping them at a certain position depending on the occurrence of the anomaly) and/or adjusting operation of a number of independently moving carriers **4** (*e.g.,* by stopping an independently moving carrier **4** if the anomaly is determined to occur on the same independently moving carrier **4,** require the substitution of the faulty independently moving carrier **4** with a non-faulty one and adapt the operation of the remaining independently moving carriers **4** when a new independently moving carrier **4** is added or a (faulty) independently moving carrier **4** is removed) as a function of the determination of the occurrence of the anomaly in the operation of the independently movable carriers **4** and/or provide assistance to a user.

Furthermore, according to an aspect of the present invention, the electronic processing resources **7** are configured to receive further data relative to the operation of the independently moving carriers **4** and also process the further data in addition to processing the data outputted by the sensory system **6** to determine the occurrence of a possible anomaly in the operation of the independently movable carriers **4.** In particular, as also detailed in the following paragraphs, the further data comprises at least one of:
- data on the motion of the independently movable carriers **4** along respective paths **P;**
- data on the manipulation of the packaging containers **5** by the independently movable carriers **4;**
- identifiers of the independently moving carrier **4** and/or the packaging container **5;** and
- a position of the independently movable carriers **4** and momentum **p** of the same independently movable carriers **4.**

According to an aspect of the present invention, the sensory system **6** comprises at least one among a gyroscope, an accelerometer, a vibration sensor, an electrical current sensor (*e.g.,* embedded in the system **3**), a positioning offset sensor (*e.g.* embedded in the system **3**) and a magnetic sensor; thus, the associated physical quantities comprise at least one among a physical orientation of the independently movable carrier **4,** *e.g.* a variation thereof over time, an acceleration and/or speed of the independently movable carrier **4,** preferably over time, quantities related to the vibration of the independently movable carriers **4** (*e.g.* at a processing station **3A, 3B, 3C),** electrical current **I** provided to operate, *i.e.* move, the independently movable carriers **4** (*e.g.* at a processing station **3A, 3B, 3C),** specifically to the planar motor system **3,** quantities related to errors in the position of the independently movable carriers **4** with respect to a predetermined position of the same (*e.g.* at a processing station **3A, 3B, 3C**), magnetic moment **M** of the independently movable carriers **4** (*e.g*. at a processing station **3A, 3B, 3C**), preferably magnetic interferences to which the independently movable carriers **4** can be subjected to and/or faults on magnetic components of the independently movable carrier **4,** a force **F** applied to the independently movable carriers **4** and/or the packaging containers **5** (*e.g.* at a processing station **3A, 3B, 3C**), namely forces **F** applied for moving the independently movable carriers **4** and/or the packaging containers **5** along the path **P** during operation of the planar motor system **3** (*e.g.,* the magnetic force generated by the plates **11** to move the independently movable carriers **4** and/or the packaging containers **5**) and quantities related to the operation of an end effector **12** positioned on the independently movable carrier **4** and configured to relatively move with respect to the independently movable carrier **4.**

Furthermore, the data relative to the motion of the independently movable carriers **4** along the path **P** comprises at least one between a position of the independently movable carriers **4** and the momentum **p** of the same independently movable carriers **4.**

According to an aspect of the present invention, the electronic processing resources **7** are configured to process the data outputted by the sensory system **6** and optionally the further data by applying a classification model to the data outputted by the sensory system **6** and optionally the abovementioned further data thereby classifying them according to one or more classes (for example a first and a second class **C₁, C₂**), indicative of the presence or absence of a possible anomaly in the operation of the independently movable carriers **4.**

According to an aspect of the present invention, the classification model is obtained after training a dedicated algorithm, loaded in and executable by the electronic processing resource **7,** on a set of training data, the latter being a database of data including data relative to physical quantities associated with the operations of the independently movable carriers **4,** *e.g.* when manipulating the packaging containers **5,** *e.g*. data previously acquired by the sensory system **6** and optionally the abovementioned further data and stored in an internal storage of the electronic processing resources **7;** for instance, the set of training images comprise data associated with the presence and absence of anomalies, *i.e*. the data is heterogeneous and is known to be associated to a certain condition. According to an aspect of the present invention, in case the algorithm is trained in a supervised manner, each data of the set of training data is associated with respective labels, the latter being related to the presence/absence of anomalies. Thus, electronic processing resource **7** are configured to obtain the classification model by:
- providing a portion of data from the set of training data with the associated labels to the algorithm in order for the latter to classify each data and, thus, determine a classification model;
- classifying the remaining data of the set of training data by means of the classification model, the remaining data being provided without the respective labels;
- evaluating the accuracy of the classification model based on the classification operated by the algorithm and the labels associated with the remaining data; and
- refining the classification model based on the calculated accuracy, *i.e.* re-training the classification model on the basis of the calculated accuracy.

According to a further aspect of the present invention, the algorithm may also be trained in an unsupervised or partially supervised manner, meaning that the set of training data may be either fully non-labelled (unsupervised) or at least partially labelled (partially supervised). In these cases, the classification model may be obtained, *e.g.,* by providing training data only related to the presence or absence of anomalies, so that the algorithm may recognize such anomalies based on the provided data.

According to a further aspect of the present invention, the electronic processing resources **7** are configured to process the data outputted by the sensory system **6** and optionally the abovementioned further data by verifying if a proprietary criterion is fulfilled, in particular by verifying at least one between a threshold and a range criterion. It is noted that, according to an aspect of the present invention, not disclosed in detail hereinafter, the abovementioned classification and the verification with the threshold or range criterion can be applied together; thus, the process step may be rule-based as well as data-driven.

In particular, according to the threshold criterion, the data outputted by the sensory system **6** reach predetermined threshold values; in other words, the abovementioned step of verifying comprises determining if the values of the considered data reach certain, relative predetermined threshold values. For example, when the sensory system **6** comprises a gyroscope, the value of the associated orientation variation over time is verified to reach a related threshold value.

Furthermore, according to the range criterion, the data outputted by the sensory system **6** and optionally the abovementioned further data are within respective predetermined confidentiality ranges; in other words, the abovementioned step of verifying comprises determining if the values of the considered data are within respective predetermined ranges. For example, when the sensory system **6** comprises a gyroscope, the value of the associated angle variation over time is verified to be within a related range of values.

Furthermore, the electronic processing resources **7** are configured to determine the occurrence of a possible anomaly in the operation of the independently movable carriers **4** by determining that the proprietary criterion is not fulfilled. In other words, according to embodiments of the present invention, the electronic processing resources **7** are configured to determine the occurrence of a possible anomaly in the operation of the independently movable carriers **4** by verifying if the data either reach the respective threshold values or are out of the respective ranges.

According to a further aspect of the present invention, the electronic processing resources **7** are configured to process the data outputted by the sensory system **6** and optionally the abovementioned further data by determining one or more indicators indicative of the occurrence of a possible anomaly in the operation of the independently movable carriers **4.** On this regard, the Applicant notes that the occurrence of an anomaly either related to the condition and/or to the process steps implemented by the independently movable carriers **4** may be associated to values or variations of the values of the physical quantities sensed by the sensory system **6** and/or to the abovementioned further data, *i.e.* the indicators allow to characterize the condition and process monitoring procedure implemented by the present system **1.** Thus, independently on how it is determined that the occurrence of anomaly is present, the present system 1 allows to determine which are the abovementioned indicators; for example, the indicators may be associated with the second class **C₂** indicative of the occurrence of an anomaly or data, either related to the motion of the independently movable carriers **4** along the path **P** and/or outputted by the sensory system **6,** not fulfilling the threshold or the range criterion.

According to an aspect of the present invention, the electronic processing resources **7** are configured to process the data outputted by the sensory system **6** and optionally the abovementioned further data also to determine one or more statistical quantities, in particular at least one among root mean square, RMS, values, standard deviation, σ, values, Kurtosis values, percentiles, maximum and minimum values, crest factors and shape factors, related to the planar motor system **3** and, more in particular, the independently movable carriers **4.** Consequently, the electronic processing resources **7** are configured to determine the occurrence of a possible anomaly in the operation of the independently movable carriers **4** also based on the one or more statistical quantities. On this regard, the Applicant notes that the determination of the abovementioned statistical quantities provide further information relating to the planar motor system **3** and, more in particular, the independently movable carriers **4,** specifically their conditions and/or their functioning; in particular, being the objective to perform condition and process monitoring, the determination of the abovementioned statistical quantities allows to synthetize and extrapolate key health indicators from the acquired data and evaluate distribution and deviation of them over time

Furthermore, the electronic processing resources **7** are configured to provide assistance to a user regarding the possible anomaly in the operation of the independently movable carriers **4** by performing at least one of the following:
- generate a command for the packaging line **2** and/or the independently movable carriers **4** to discard packaging containers **5** based on the determination of the occurrence of the possible anomaly, *i.e.* to discard the packaging containers 5 determined to have been manipulated by an independently movable carrier **4** subject to a determined anomaly;
- generate a notification based on the determination of the occurrence of the possible anomaly indicative of the process quality and/or the conditions of either the packaging line **2** and/or the independently movable carriers **4,** *e.g*. provide information the gripping force applied by the end effectors **12** of the independently movable carriers **4**; and
- generate a command for the independently movable carriers **4** to move the packaging containers **5** to a control station (not shown) of the packaging line **2** to be verified.

According to a further aspect of the present invention, one or more independently movable carrier 4 and/or one or more packaging container **5** are identified with respective identifiers (*e.g.,* QR codes, Data Matrices), *e.g.* when an anomaly is detected; consequently, the electronic processing resources **7** are further configured to acquire and process the identifiers of both the independently movable carriers **4** and the packaging containers **5** to perform at least one of the following:
- process the identifier of an independently movable carrier **4** to determine quantities relating to the characteristics of the independently movable carrier **4**;
- monitor a package production process carried out by the packaging line **2** based on the identifier of a packaging container **5**;
- determine and monitor processing parameters and motion kinematic and dynamic parameters (*e.g.* speed and acceleration) related to the packaging containers **5** and the independently movable carriers **4** to trace the package production process and monitor the conditions of both the process and of the independently movable carriers **4** and/or the packaging containers **5** based on the identifiers of an independently movable carrier **4** and/or of a packaging container **5.**

Furthermore, according to another aspect of the present invention, the sensory system **6** is configured to output data relative to physical quantities associated with the operation of the independently movable carriers **4** when manipulating the packaging containers **5** and/or when the independently movable carriers **4** receive and/or release the packaging containers **5.**

According to a further aspect of the present invention, the sensory system **6** is at least partially positioned at, preferably releasably mounted on, a number of independently movable carriers **4** and/or the sensory system **6** is at least partially positioned at, preferably releasably mounted on, a processing station **3A, 3B, 3C.** In other words, at least a part of the sensors of the sensory system **6** may be positioned either on one or more independently moving carriers **4** and/or at the processing stations **3A, 3B, 3C.**

Referring to Figures 2 and 3, a variation of two indicators, e.g. vibration, in particular in areas **A** and **B** with respect to the position of the independently movable carrier **4** will be considered; in particular, according to the examples discussed below, the areas **A** and **B** respectively refer to the receiving station **3A** and the cap applicator station **3B** of the planar motor system **3.**

In particular, the Applicant has noted that, in areas **A** and **B,** wherein the occurrence of an anomaly has been determined to be present, the value of the indicators **IV₁, IV₂** vary with respect to a corresponding baseline value **BV₁, BV₂.** In particular, referring to Figure 2, the Applicant has noted that the value of the first indicator **IV₁** varies in a non-negligible manner in areas **A** and **B** with respect to the corresponding baseline value **BV₁,** *i.e.* the occurrence of an anomaly is determined to not be necessarily associated with a variation of the value of the first indicator, meaning that its value is an important factor to be considered when monitoring the conditions and process of the packaging line **2.** Furthermore, the Applicant has noted that, referring to Figure 3, the value of the second indicator **IV₂** slightly varies in areas **A** and **B** with respect to the corresponding baseline value **BV₂,** *i.e*. the occurrence of an anomaly is determined to be associated with a variation of the value of the second indicator, meaning that its value is a less important factor with respect to the one assumed by the first indicator to be considered when monitoring the conditions and process of the packaging line **2.**

In other words, the present system **1** allows to determine one or more indicators, *e.g.* acquired directly or indirectly, according to the modalities described in the previous paragraphs, which are associated and are to be considered when evaluating the occurrence of a possible anomaly either in the motion of the independently movable carriers **4** and/or in the manipulation of the packaging containers **5** by the independently movable carriers **4.**

The advantages that the present invention allows to achieve may be readily appreciated by the skilled person.

In particular, the present system **1** and the related method allow to monitor in real time the quality of the process, as well as the conditions of the independently movable carriers **4** and of the packaging containers **5** to be manipulated, to provide a corresponding assistance to a user, for example by automatically discarding or moving to a control station the packaging containers **5** to which an anomaly is determined to be associated. This is particularly advantageous for monitoring and preventing the occurrence of anomalies either in the motion of the independently movable carriers **4** and/or in the manipulation of the packaging containers **5** by the independently movable carriers **4** as, by monitoring the identified indicators, it is possible to determine the presence of unwanted variations (see, *e.g.,* Figure 2 and the related variation of the value of the first indicator **IV₁** with respect to the corresponding baseline value **BV₁)** which would be most likely associated with an anomaly.

Furthermore, given the characteristics of the present invention, it is possible to:
- increase the efficiency of the packaging line **2,** as defective packaging containers **5** may be discarded or sent to a control station for a verification and defective independently movable carriers **4** may be isolated and repaired;
- minimize waste, as only the defective packaging containers **5** or independently movable carriers **4** will be considered; and
- optimize maintenance intervals for the monitored packaging containers **5** or independently movable carriers **4.**

In conclusion, from the description above follows that, although various embodiments of the invention have been described and shown, the invention is not restricted thereto, but may also be embodied in other ways within the scope of the subject-matter defined in the following claims.

## Claims

1. System (**1**) of fault prediction for a packaging line (**2**) including a planar motor system (**3**), the planar motor system (**3**) comprising a planar base element (**10**) as well as independently movable carriers (**4**) configured to manipulate packaging containers (**5**) and movable over the planar base element (**10**); the system (**1**) comprises:
- a sensory system (**6**) configured to output data relative to physical quantities associated with operation of the independently movable carriers (**4**); and
- electronic processing resources (**7**) in communication the sensory system (**6**) and configured to:
- receive the data outputted by the sensory system (**6**); and
- process the data outputted by the sensory system (**6**) to determine the occurrence of a possible anomaly in the operation of the independently movable carriers (**4**).

2. The system (**1**) according to claim **1,** wherein, if an occurrence of a possible anomaly (**4**) is determined to be present or predicted to occur, the electronic processing resources (**7**) are configured to, as a function of the determination of the occurrence of the anomaly in the operation of the independently movable carriers (**4**), adjust operation of the packaging line (**2**) and/or to adjust operation of a number of independently moving carriers (4) and/or to provide assistance to a user.

3. The system **(1)** according to any one of the preceding claims, wherein the electronic processing resources (**7**) are configured to receive further data relative to the operation of the independently moving carriers (**4**),
wherein the electronic processing resources (7) are configured to also process the further data in addition to processing the data outputted by the sensory system (**6**) to determine the occurrence of a possible anomaly in the operation of the independently movable carriers (**4**),
the further data comprises at least one of:
- data on the motion of the independently movable carriers **(4)** along respective paths (**P**);
- data on the manipulation of the packaging containers **(5)** by the independently movable carriers (**4**);
- identifiers of the independently moving carrier (**4**) and/or the packaging container (**5**); and
- a position of the independently movable carriers (**4**) and/or momentum (**p**) of the same independently movable carriers (**4**).

4. The system (**1**) according to any one of the preceding claims, wherein the sensory system (**6**) comprises at least at least one among a gyroscope, an accelerometer, a vibration sensor, an electrical current sensor, a positioning offset sensor and a magnetic sensor,
and wherein the associated physical quantities comprise at least one among:
- a physical orientation of the independently movable carrier (**4**);
- an acceleration and/or speed of the independently movable carrier (**4**), preferably over time;
- quantities related to vibration of the independently movable carriers (**4**), preferably at a processing station (**3A, 3B, 3C**);
- electrical current (**I**) provided to operate the independently movable carriers (**4**), preferably at a processing station (**3A, 3B, 3C**);
- quantities related to errors in the position of the independently movable carriers (**4**) with respect to a predetermined position of the same, preferably at a processing station (**3A, 3B, 3C**);
- magnetic moment (**M**) of the independently movable carriers (4), preferably magnetic interferences to which the independently movable carriers (**4**) can be subjected to and/or faults on magnetic components of the independently movable carrier (**4**));
- a force (**F**) applied to the independently movable carriers (**4**) and/or to the packaging containers (**5**), preferably at a processing station (3A, 3B, 3C); and
- quantities related to the operation of an end effector (**12**) positioned on the independently movable carrier (**4**) and configured to relatively move with respect to the independently movable carrier (**4**).

5. The system (**1**) according to any one of the preceding claims, wherein the electronic processing resources (**7**) are configured to process the data outputted by the sensory system (**6**) by applying a classification model receiving as an input the data outputted by the sensory system (**6**) and providing as an output one or more classes (**C₁, C₂**), indicative of the presence or absence of a possible anomaly in the operation of the independently movable carriers (**4**).

6. The system (**1**) according to any of the preceding claims, wherein the electronic processing resources (**7**) are configured to process the data outputted by the sensory system (**6**) by verifying if a proprietary criterion is fulfilled, in particular by verifying at least one between:
- a threshold criterion wherein the data outputted by the sensory system (**6**) reach a predetermined threshold value; and
- a range criterion wherein the data outputted by the sensory system (**6**) is within a respective predetermined range,
and wherein the electronic processing resources (**7**) are configured to determine the occurrence of a possible anomaly in the operation of the independently movable carriers (**4**) as a function of the proprietary criterion.

7. The system (**1**) according to any one of the preceding claims, wherein the electronic processing resources (**7**) are configured to process the data outputted by the sensory system (**6**) to determine one or more statistical quantities related to the independently moving carriers (**4**), in particular at least one among root mean square values, standard deviation values, Kurtosis values, percentiles, maximum and minimum values, crest factors and shape factors,
and wherein the electronic processing resources (**7**) are configured to determine the occurrence of a possible anomaly in the operation of the independently movable carriers (**4**) also based on the one or more statistical quantities.

8. The system (**1**) according to any one of claims **2-7,** wherein the electronic processing resources (**7**) are configured to provide assistance to a user regarding the possible anomaly in the operation of the independently movable carriers (**4**) by performing at least one of the following:
- generate a command for the packaging line (**2**) and/or the independently movable carriers (**4**) to discard packaging containers (**5**) based on the determination of the occurrence of the possible anomaly;
- generate a notification based on the determination of the occurrence of the possible anomaly indicative of the process quality and/or the conditions of either the packaging line (**2**) and/or the independently movable carriers (**4**); and
- generate a command for the independently movable carriers (**4**) to move the packaging containers (5) to a control station of the packaging line (**2**) to be verified.

9. The system (**1**) according to any one of the preceding claims, wherein each independently movable carrier (**4**) and each packaging container (**5**) are identified with a respective identifier,
and wherein the electronic processing resources (**7**) are further configured to acquire and process the identifiers of both the independently movable carriers (**4**) and the packaging containers (**5**) to perform at least one of the following:
- process the identifier of an independently movable carrier (**4**) to determine quantities relating to the characteristics of the independently movable carrier (**4**);
- monitor a package production process carried out by the packaging line (**2**) based on identifier of a packaging container (**5**);
- determine and monitor processing parameters and motion kinematic and dynamic parameters related to the packaging containers (**5**) and the independently movable carriers (**4**) to trace the package production process and monitor the conditions of both the process and of the independently movable carriers (**4**) and/or the packaging containers (**5**) based on the identifiers of an independently movable carrier (**4**) and/or of a packaging container (**5**).

10. The system (**1**) according to any one of the preceding claims, wherein the sensory system (**6**) is configured to output data relative to physical quantities associated with operation of the independently movable carriers (**4**) when manipulating the packaging containers (**5**) and/or when the independently movable carriers (**4**) receive and/or release the packaging containers (**5**).

11. The system (**1**) according to any one of the preceding claims, wherein the sensory system (**6**) is at least partially positioned at, preferably releasably mounted on, a number of independently movable carriers (**4**) and/or the sensory system (**6**) is at least partially positioned at, preferably releasably mounted on, a processing station (**3A, 3B, 3C**).

12. Method of fault prediction for a packaging line (**2**) comprising a planar motor system (**3**), the planar motor system (**3**) comprising a planar base element (**10**) as well as independently movable carriers (**4**) configured to manipulate packaging containers (**5**) and movable over the planar base element (**10**); the method comprises the steps of:
- acquiring data relative to physical quantities associated with operation of the independently movable carriers (**4**);
- processing the data relative to physical quantities associated with operation of the independently movable carriers (**4**) to determine the occurrence of a possible anomaly in the operation of the independently movable carriers (**4**).

13. The method according to claim **12,** wherein the step of processing comprises the step of applying a classification model to the data relative to physical quantities associated with operation of the independently movable carriers (**4**) and providing as an output one or more classes (**C₁, C₂**), indicative of the presence or absence of a possible anomaly in the operation of the independently movable carriers (**4**).

14. Packaging line (**2**) for producing packages from a packaging material, each package being filled with a pourable product,
wherein the packaging line (**2**) comprises a system (**1**) of fault prediction according to any one of claims **1-11.**

15. Computer program product loadable and executable by a system (**1**) of fault prediction for a packaging line (**2**) according to any one of claims **1-11** and configured to cause, when executed, the system (**1**) to operate as according to a method of fault prediction according to any one of claims **12-13.**
